# EUROPÄISCHE PATENTSCHRIFT

(11) **EP 0 799 458 B1**
(45) Veröffentlichungstag und Bekanntmachung des Hinweises auf die Patenterteilung: **14.10.1998**
(21) Anmeldenummer: 95943193.3
(22) Anmeldetag: 22.12.1995
(51) Int. Cl.: G06K 7/08

(54) **Verfahren zur digitalen Erfassung des Umlaufs von Bierfässern**
Method of digitally acquiring data on handling operations involvong beer barrels
Procédé de saisie numerique de donnees concernant la manipulation de futs de biere

(30) Priorität: 23.12.1994 DE 4446203
(43) Veröffentlichungstag der Anmeldung: 08.10.1997
(73) Patentinhaber: L & S LOGISTIC & SOFTWARE GMBH, 32825 Blomberg (DE)
(72) Erfinder: KEUPER, Hartmut, D-40710 Hilden (DE)
(74) Vertreter: Brommer, Hans Joachim, Dr.-Ing.
(86) Internationale Anmeldenummer: EP9505101
(87) Internationale Veröffentlichungsnummer: WO9620459

(56) Entgegenhaltungen:
- EP-A- 0 679 605
- DE-A- 3 506 639
- PATENT ABSTRACTS OF JAPAN vol. 11, no. 208 (P-593), 7.Juli 1987 & JP,A,62 030980 (FUJI ELECTRIC CO. LTD), 9.Februar 1987,

## Beschreibung

### TECHNISCHES GEBIET

Die Erfindung betrifft ein Verfahren zur digitalen Erfassung des Umlaufs, wie Füllung, Leerung, Transport, Lagerung, von Bierfässern oder ähnlichen Behältern, bei welchem Verfahren zumindest während der Füllung des Fasses an einer Füllstation ein in oder an diesem Faß angebrachter Datenträger mit einer der Füllstation zugeordneten Sende-/Empfangseinrichtung zwecks Übertragung von Daten in Wirkverbindung steht, wobei während des (oder nach dem) Füllen des Fasses Fülldaten, wie das Fülldatum, ein Kennzeichen betreffend die eingefüllte Flüssigkeitsart, wie Biersorte, die Füllmenqe, eine laufende Füllnummer usw. von der Sende-/Empfangseinrichtung zum Datenträger übertragen und dort als Datensatz derart abrufbar abgespeichert wird, daß die Daten auch zu einem späteren Zeitpunkt an anderer Stelle ausgelesen werden können.

### STAND DER TECHNIK

Ein Verfahren der eingangs genannten Art ist aus der DE-A-3 506 639 bereits bekannt. Als Datenträger wird ein Strichcode-Streifen vorgeschlagen, der durch ein durchsichtiges Fenster sichtbar ist und optisch gelesen werden kann. Als alternative Möglichkeit wird als Datenträger eine programmierbare elektronische Schaltung, vorzugsweise in Form eines Mikrochips, erwähnt, der von einem Gehäuse gas- und flüssigkeitsdicht umschlossen ist. Hierdurch soll die Möglichkeit geschaffen werden, zusätzlich zu fest vorgegebenen, in der Schaltung gespeicherten Daten auch noch variable Daten einzugeben, so daß der Datenträger nicht nur die üblichen Behälternummern etc. wiederzugeben vermag, sondern zusätzlich auch die Herstellungsdaten, Chargennummer, Empfänqercode, Auslieferdaten etc. aufzunehmen vermag. Der Datenabgriff erfolgt gemäß der Druckschrift direkt über Kontakte, die auf der Gehäuseaußenseite angeordnet sind, oder indirekt über Sensoreinrichtungen.

Eine Fortschreibung der gespeicherten Daten innerhalb des Mikroschips während des Faßumlaufs ist nicht erwähnt und offenbar auch nicht in Erwägung gezogen worden.

Aus der Zeitschrift "BRAUWELT" Nr. 42 (1994), Seite 2141, ist ein Verfahren bekannt, bei der ein Transponder bestehend aus einem Mikrochip und angeschlossener Spule, eingegossen in ein robustes Kunststoffgehäuse, das den Transponder unempfindlich gegenüber Säuren, Laugen und mechanischen Beschädigungen machen soll, als "KegTag" auf dem Oberboden entweder im Polyurethan des Softdrink-Kegs eingebettet ist, oder auf dem Edelstahl-Keg dauerhaft angebracht ist. Als Datenspeicher enthält der Chip des Transponders einen Code sowie die Schaltungen zur Datenübertragung. Für den fortlaufenden Keq-Code bietet das System zahlreiche Kombinationsmöglichkeiten. Über eine Radiofrequenz von etwa 125 kHz sendet die Lesestation Energie aus und liest die gespeicherten Daten automatisch und berührungslos aus. Die letzte Station ist als Handgerät dargestellt, mit Tastatur und Display, wobei dieses Handgerät in die Nähe des Transponders gebracht ist, um die Funkübertragung zu bewirken.

In der Zeitschrift AUTOMATIC I.D. NEWS, EUROPE, September 1994, wird auf der Seite 18 darüber berichtet, daß die Fa. Coca Cola Fässer benutzen will, um ihre Getränke zu verteilen, statt kleine Behälter. In Deutschland will die Firma damit etwa 3 Millionen Fässer handhaben, deren Umlauf und physikalischer Zustand überwacht werden soll. Um diesen Vorgang zu automatisieren und die Absendedaten, Inhalte, Chargendaten, Frachtführer und Verbraucher für jedes ausgehende Faß festzustellen, sowie auch die Rückkehrdaten, Inhalte, Zustand, Absender dieser Fässer, wird ein automatisches Identifizierungssystem benutzt. Dabei wird das bisher benutzte Strichcodesystem durch ein Radiofrequenzidentifikationssystem ersetzt. Das hat den Vorteil einer größeren Langzeitbetriebssicherheit und die Unmöglichkeit der Manipulation oder der Zerstörung des Transponderfasses, neben einer Reduzierung der erforderlichen Anzahl von Fässern aufgrund deren besserer Ausnutzung.

Ausgeführt wird dieses System durch eine Anlage, bei der die einzelnen Fässer mit Datenträgern ausgerüstet sind, die an dem Faß angebracht werden, desweiteren mit industriell standardisierten Leseeinrichtungen für die Benutzung an Ort und Stelle innerhalb der Fabrik, desweiteren mobile Datensammeleinrichtungen für Feldbenutzung, mit Interface-Einrichtungen zum drahtlosen Verbinden zu einem Computersystem sowie Software-Einrichtungen zum Aufnehmen, für Arbeiten und Speichern von logistischen Informationen, mit einem großen Speicher und schnellen Datenaustausch, die eine Echtzeitverarbeitung von allen Daten ermöglicht. Jedes Coca-Cola-Faß besitzt eine elektronische Kennung mit einer spezifischen Code-Nummer und weiteren Daten, wie Gewicht und Produktionszeit des Fasses, Anzahl der Zyklen, Zeit, die während des gegenwärtigen Zyklus vergangen ist, Inspektionsdaten und Status, sowie Name des Getränks.

Derartige Transponder sind ohne Batterie und speichern ihre Informationen elektronisch. Lesestationen, durch die die Transponder während des Materialflusses hindurchlaufen, liefern den Transpondern Energie sowie die Daten durch Funkübertragung. Somit ist eine Datenübertragung von dem Transponder zu dem Lesegerät möglich. Gemäß dieser Druckschrift werden Transponder benutzt, die lediglich ein Auslesen ermöglichen, und die vom Hersteller mit einer festen, eindeutigen und unveränderbaren Zählziffer programmiert sind. Der Transponder, der eine einfache und zähe Konstruktion unter Verwendung von einer Spule auf einem Chip benutzt, wird als sehr klein und versagenssicher geschildert. Auch seien die Kosten für Material und Einpassung sehr niedrig, was zu einem niedrigen Preis für den Transponder selbst führe.

Die von acht stationären und sechs mobilen Lesegeräten aufgenommenen Informationen werden einem Computer (PC) zur Ermittlung von Fabrikations- bzw. Füllart zugeführt.

Die Lesegeräte sind mit dem PC verbunden und die gesammelten Daten werden durch das System auf Korrektheit und Plausibilität überprüft (z. B. Überprüfung der Zeit zwischen dem Waszhen und dem Füllen). Wenn diese Zeit zu kurz ist, könnte es sein, daß das Waschverfahren übersprungen worden ist. Fässer, die derartige fehlerhafte Statuseingaben aufweisen, werden zurückgewiesen und können nicht für eine weitere Füllung verwendet werden, es sei denn, daß die Ursache für diesen negativen Status ermittelt und gelöst wurde. Das korrekt gefüllte Faß verläßt die Fabrik und sein Dateneintrag im PC wird wieder hergestellt.

Schon vorhandene Fässer können dadurch mit Transpondern versehen werden, daß diese auf die Oberseite der Fässer aufgeklebt werden, andererseits können die Transponder auch in Polyurethan-Fässer eingesetzt werden, indem sie in Bohrungen eingebracht werden, die anschließend dann versiegelt werden. Bei neuen Fässern können die Transponder von vornherein in die Fässer eingebracht werden.

Desweiteren sei auf die DE 42 11 119 C2 verwiesen, wo ein Verfahren zur Erfassung der Entleerungs- bzw. Entsorgungsdaten bei der Abfuhr von in Müllbehältern zwischengelagerten Müll durch Müllfahrzeuge beschrieben wird, wobei ebenfalls ein batterieloser Transponder mit individuellem Code eingesetzt wird, der innerhalb oder auf dem Müllbehälter angebracht ist. Beim Entleeren des Müllfasses am Müllfahrzeug wird der Transponder in den Bereich einer Antenne gebracht, die einen HF-Impuls an den Transponder sendet und diesen dadurch zur Abgabe seiner Kennung veranlaßt. Diese Kennung wird dann in einer Rechnereinrichtung verarbeitet, woraufhin dann anschließend in den Transponder eine Information abgespeichert wird, die beispielsweise die Müllmenge, die entleert worden ist, anzeigt.

Auf diese Weise wird sowohl im Müllbehälter des jeweiligen Kunden der Müllabfuhr wie auch in der Müllabfuhrzentrale eine Datenspeicherung vorgenommen, die redundant ist und dadurch eine gegenseitige Überprüfung erlaubt.

Aufgabe der Erfindung ist es, das für Getränkefässer bekannte Verfahren zur Erfassung des Umlaufs von Fässern dahingehend zu erweiteren und zu verfeinern, daß eine noch genauere Überwachung des Faßumlaufs wie auch des ausgelieferten Bieres oder sonstigen Getränkes ermöglicht wird, bei gleichzeitiger klarer Kontrolle der Eigenschaften der jeweiligen Fässer und der in den Fässern enthaltenen Flüssigkeiten, wie Bier. Die Faßdaten sollen kundenspezifisch programmierbar und ablagerbar sein, um diese Daten dezentral zur Verfügung zu haben. Insbesondere sollen die Daten des Produktionsprozesses aber auch fortschreibbar sein.

Gelöst wird die Aufgabe dadurch, daß der Datenträger einen Transponder umfaßt, der eine mit einem Digitalchip versehene Ringspule aufweist, aus welchem Digitalchip die Daten nicht nur ausgelesen, sondern in den durch einen Einlesevorgang während des Umlaufs des Fasses auch fortgeschrieben werden können.

Auf diese Weise läßt sich nicht nur die Erfassung, sondern auch die Fortschreibung der einzelnen Daten dezentralisiert und wesentlich effektiver gestalten. Die Überprüfung und Datenfortschreibung erfolgt dabei nicht nur an einer Zentralstelle (wie beispielsweise an einer Füllstation für Bier), sondern auch an anderen Orten, wo dies zweckmäßig sein sollte.

Es ist vorgesehen, daß bei Herstellung des Fasses dem Faß ein Datenträger zugeordnet wird, in dem Herstellungsdaten für das Faß, wie eine laufende Herstellungsnummer(auch in Form einer Prüfziffer), aber auch Herstellungstag, Herstellungsfirma, Herstellungsmaterial, Volumen usw., also behälterspezifische Daten (Stammdaten) unveränderbar abrufbar gespeichert werden, wobei der Datenträger als Transponder ausgestaltet wird. Diese Daten sind unveränderlich oder mit Hardwareschutz fest programmiert.

Gemäß einer weiteren Ausführungsform des erfindungsgemäßen Verfahrens wird das während des Eichvorganges eingegebene letzte Eichdatum oder auch andere Stammdaten zwar abrufbar fest (nur durch besondere Maßnahmen veränderbar) eingespeichert. Bei einem neuen Eichvorgang, kann dann dieses Datum gleichwohl neu eingebrannt werden. Bei einem Besitzerwechsel ist es dadurch auch möglich, Daten über den Besitzübergang abrufbar fest einzuspeichern.

Jeweils veränderbar während des Datenaustausches könnten jedoch folgende Daten (Fertigunqsdaten) sein: Fülldaten wie Entnahme eines leeren Fasses aus dem Faßlager; Waschen des Fasses; Füllen des Fasses; Füllungssorte (z. B. Bierart) Verzollung des Fasses; Abfüllbetrieb; Kunde; Datum der Auslieferung des Fasses an den Verbraucher oder Kunden (kundenspezifische Daten).

Jeder derartige Vorgang wird dezentral überwacht und dessen Erledigung in den Transponder eingegeben, wobei diese Daten auch jederzeit wieder auslesbar sind, entweder an irgendeiner dezentralen Stelle, wo dieses Faß sich gerade befindet, oder bei der Rückkehr des Fasses zu einer Zentrale dort selbst.

Um dieses zu verwirklichen, können entweder stationäre Sende-/Empfangseinrichtungen verwendet werden, oder aber auch handgehaltene (mobile) Sende-/Empfangseinrichtungen.

Sowohl der stationäre wie auch der mobile Sender/Empfänger ermöglichen einen Datenaustausch über beispielsweise einen nachgeschalteten Rechner, einem nachgeschalteten Speicher und einer Schnittstelle, die wiederum mit einem Datennetz verknüpft sein mag.

Als besonders günstig hat es sich erwiesen, wenn die Speichervorrichtung in dem Transponder mit mehreren Seiten (Pages) vorgesehen wird, wobei beispielsweise eine erste Seite einen Festcode aufweist, der die Daten enthält, die sich im Laufe des Betriebslebens eines Fasses nicht mehr ändern, eine zweite Seite mehrfach les- und mehrfach überschreibbare Codes, wie beispielsweise ständig wechselnde Daten, und eine weitere Seite, mit der nur einmal einschreibbare Codes aufgenommen werden, wie beispielsweise das Eichdatum eines Fasses.

### KURZE BESCHREIBUNG DER ERFINDUNG

Die Erfindung wird nachfolgend anhand von Ausführungsbeispielen näher erläutert, die in den Zeichnungen dargestellt sind.

Es zeigt:
- Fig. 1: ein Blockschaltbild zur Erläuterung des erfindungsgemäßen Verfahrens;
- Fig. 2: das Format für die in dem Transponder gespeicherten Daten;
- Fig. 3: die Befestigungsmöglichkeit eines Transponders bei einem Stahlfaß;
- Fig. 4: die Befestigungsmöglichkeit eines Transponders bei einem Holz- oder Polyurethanfaß;
- Fig. 5: einen ringförmigen Transponder in Draufsicht; und
- Fig. 6: einen Querschnitt durch den Ring entlang der Schnittlinie VI - VI.

### BESTE WEGE DER AUSFÜHRUNG DER ERFINDUNG

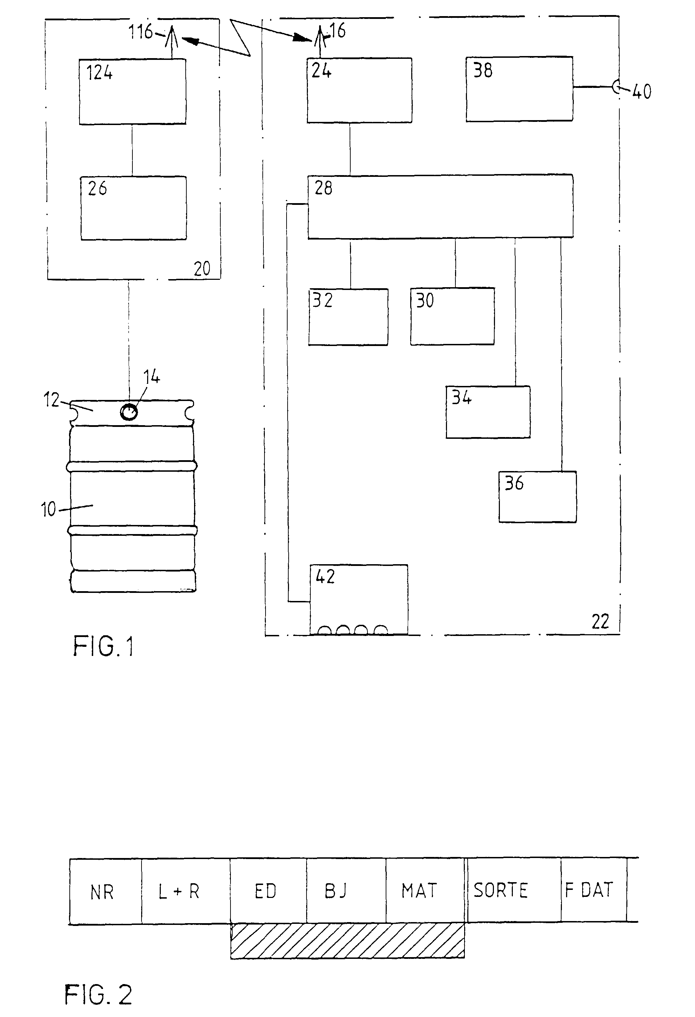

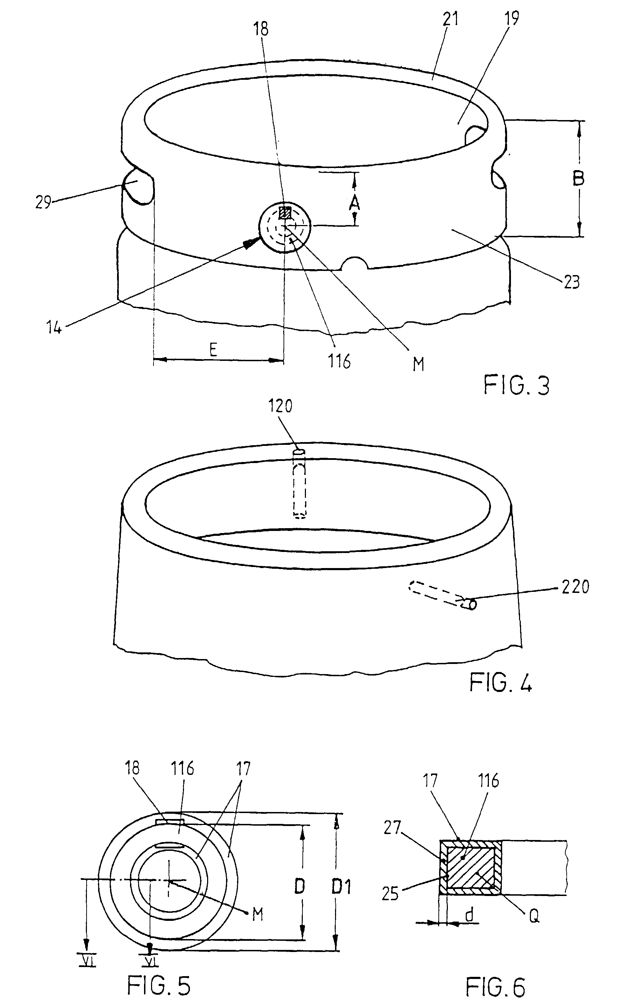

In Fig. 1 ist ein Faß 10 zu erkennen, hier beispielsweise ein Stahlfaß für Bier, bei dem am oberen Rand 12 ein in Kunststoff eingebetteter Transponder 14 eingelagert ist, der gemäß Fig. 3 bzw. 5 und 6 aus einer Ringspule 116, umhüllt von Vergußmasse 17, besteht, wobei die Spulenenden zu einem Mikrochip 18 geführt sind, dessen Funktion anhand des Blockes 20 in Fig.1 nun näher erläutert werden soll. Ein von einer Sende-/Empfangseinrichtung 124 eines mobilen oder stationären Überwachungsblockes 22 ausgehendes RF-Signal (ausgesendet über eine Antenne 16) wird von der als Antenne wirkenden Spule 116 aufgenommen. Das RF-Signal ist ausreichend kräftig, um einerseits den Mikrochip 18 und damit die Sende- und Empfangseinrichtung 124 sowie eine Datenspeichereinrichtung 26 mit Betriebsstrom zu versorgen, andererseits sind dieser RF-Frequenz Datensignale aufgedrückt, die von der Sende-/Empfangseinrichtung aufgenommen und verarbeitet werden, beispielsweise dadurch, daß aufgenommene Daten in der Speichereinrichtung 26 abgelegt werden, oder auch dadurch, daß aus diesem Datenspeicher 26 Daten herausgelesen und anschließend über die Antenne 116 ein RF-Signal wieder abgegeben wird, das von der Antenne 16 des Überwachungsblockes 22 aufgenommen und einem Sende-/Empfangsteil 24 zugeführt wird, wo die entsprechenden Daten von der Radiofrequenz RF wieder decodiert und zur weiteren Verarbeitung beispielsweise einem Rechner 28 zugeführt werden. Dieser Rechner 28 ist wiederum mit einer Tastatur 30 ausgestattet, und desweiteren mit einem Display 32, einem Programm- und Arbeitsspeicher 34 sowie einem Datenspeicher 36. Desweiteren ist ein Versorgungsteil 38 zu erkennen, das hier seine Betriebsenergie für die verschiedenen Einrichtungen des Überwachungsblockes 22 liefert. Es kann sich dabei um eine Batterie handeln, die beispielsweise über einen Anschluß 40 wiederaufladbar ist, oder aber um ein Netzteil, das mit einem Netzanschluß 40 mit einer Netzversorgung in Verbindung steht. Bei Batteriebetrieb kann es sich beispielsweise um einen mobilen, von Hand bedienbaren und in der Hand tragbaren Block 22 handeln, bei Netzbetrieb um einen nicht näher beschriebenen Block, beispielsweise in Form eines PC-Rechners mit angeschlossener Empfangseinrichtung 24.

Der Block 22 weist auch eine Datenschnittstelle 42 auf, z. B. um bei einem mobilen Gerät die in dem Datenspeicher 36 gespeicherten Daten an ein zentrales Netz abzugeben.

Im Datenspeicher 26 des Transponderblockes 20 wird zweckmäßigerweise ein Datenformat angewendet, wie es in Fig. 2 schematisch dargestellt ist. Gemäß dieser Darstellung umfaßt der Datenspeicher einen ersten Teil oder eine erste Seite, die bei der Transponderherstellung fest eingegebene Daten erhält, die während der Lebenszeit des Transponders bzw. des Fasses, an dem dieser Transponder angebracht ist, unverändert bleiben sollen. Dazu gehört eine feste Transpondernummer (NR). Zu dieser festen Transpondernummer NR wird ein Referenzdatensatz in einer Referenzdatenbank abgelegt. Faß- bzw. containerbezogene Daten werden über die Datenbank dieser Nummer zugeordnet.

Ein weiterer Teil des Datenspeichers umfaßt les- und einschreibbare Daten, wie beispielsweise containerbezogene Daten, die in dem Transponder abgespeichert werden können. Dazu gehören z. B. eine laufende Nummer, Inhalt, Volumen, Fülldaten usw. für den Container oder das Faß. Die Auswertung dieser aus dem Speicher 26 herauslesbaren und in diesen hineinschreibbaren Daten erfolgt entweder zentral oder dezentral im Rechner 28 des Überwachungsblockes 22, das auch ein Handgerät sein kann, so daß eine Datenfernübertragung vom Handgerät zu anderen Zentralstationen entfällt. Durch diese dezentrale Steuerung wird der Kostenfaktor der Datenübertragung über Telefonleitung oder über Datennetze vermieden, desweiteren wirken sich Störungen innerhalb dieses Netzes nicht oder nur an einer Stelle aus (z. B. ist ein Datennetzausfall dann nicht so gravierend). Als drittes kann ein Datenspeicherbereich vorgesehen werden, der zwar ein Lesen und ein Einschreiben ermöglicht, wobei jedoch das Einschreiben mit Einbrennen erfolgt, z. B. die Vorteile des Lese/Schreib-Systems (individuelle Daten) mit der Möglichkeit der unlöschbaren Programmierung (Einbrennen) kombiniert wird. So können z. B. die Stammdaten des Containers oder Fasses eingebrannt werden, wie beispielsweise in Fig. 2 das Eichdatum "ED" das Baujahr "BJ" und das Faßmaterial "MAT".

Diese eingebrannten Daten sind nur auf besondere Weise änderbar, beispielsweise durch UV-Bestrahlung löschbar und neu einschreibbar. Diese Daten sind daher im Normalbetrieb als konstant anzusehen. Demgegenüber können weitere Daten, beispielsweise ein Hinweis auf das gefüllte Material, wie eine Biersorte, das Fülldatum (Fdat) und weitere veränderliche Daten mit Hilfe der Sende-/Empfangseinrichtung (Überwachungsblock 22) auf den Transponderblock 20 übertragen und dort in den Speicher 26 eingeschrieben und abgespeichert werden.

An jeder Stelle, an der sich der Transponder mit dem zugehörigen Faß befindet, ist somit mit Hilfe eines Überwachungsblockes 22 feststellbar, um welches genaue Faß eines Großbestandes von Fässern es sich handelt, und was dieses Faß enthält, wann das Faß gefüllt wurde, daß es vor dem Füllen gereinigt wurde, usw.

Da neben dem Datumstag auch die Uhrzeit eingegeben werden könnte, ist eine sehr genaue Überwachung des Schicksals des Fasses bzw. des Faßinhaltes möglich, so daß evtl. Fehlleitungen und Manipulationen sofort feststellbar sind.

Die Anbringung des Transponders geschieht (ohne Einschränkung seiner Wirkungsweise durch metallische Flächen) mittels "Snap-In"-, Einschraub-, Steck- oder sonstiger Verbindungstechniken, insbesondere in der Ober- oder Unterzarge des Fasses oder sonstigen geeigneten Flächen.

Der Transponder kann insbesondere, wie Fig. 3 zeigt, in den Schutzring eines Stahlfasses z. B. dadurch eingebracht werden, daß eine Rundbohrung in dem Stahlring angeordnet wird, in die ein ebenfalls ringförmiger, mit Kunststoff umkapselter Transponder eingesteckt und anschließend beispielsweise verklebt wird. Durch entsprechende Bemaßung, insbesondere Abstand des Spulenmittelpunktes vom Außenrand des Ringes, A, kann sichergestellt werden, daß die Dämpfung des Metallringes auf die verwendete Radiofrequenz (z. B. 80 kHz...140 kHz) klein genug bleibt, um eine sichere Datenübertragung von dem Überwachungsblock 22 auf den Transponderblock 20 zu gewährleisten.

Handelt es sich bei dem Faß um ein Holzfaß oder um ein Polyurethan-Faß, wird man zweckmäßigerweise statt eines diskusförmigen Transponders, wie er in Fig. 3 zu erkennen ist, einen stiftförmigen Transponder 120 wählen, der in ein entsprechendes, axial zur Faßachse ausgerichtes Bohrloch eingebracht und anschließend dieses Bohrloch durch einen Stopfen verschlossen wird. Die Anordnung kann auch radial erfolgen, siehe Bezugszahl 220. Bei einem Polyurethan-Faß ist eine Verschäumung mit Polyurethanmaterial günstig.

Die Erfindung ermöglicht im wesentlichen zwei gegenüber dem Stand der Technik neue Anwendungen:

### 1 . Anwendung:

Behälter- und kundenspezifische Informationen (Daten) werden im Transponder unter Anwendung von Softwareschutz (Schutz durch ein Kodierungsverfahren) abgespeichert und bei Bedarf teilweise, wo die Kodierung es zuläßt, fortgeschrieben. Benutzbar sind hierfür sogenannte Lese-Schreib-Speicher, z. B. des Typs EEPROM.

### 2. Anwendung:

Behälter- und kundenspezifische Daten werden im Transponder unter Anwendung von Hardware-Maßnahmen geschützt. Geeignet sind dafür sogenannte Multipage-Speicher, deren erste Seite (page) so gestaltet sein kann, daß diese mit der Speicherherstellung festgelegte Daten erhält, wie Prüfziffer, laufende Referenznummer o. ä. Diese Seite ist somit nur lesbar, (Read-Only-Memory). Eine weitere Seite (page) ist sowohl auslesbar, wie auch einschreibbar, jedoch mit der Möglichkeit einer durch Hardware-Maßnahmen (Einbrennen, z. B. durch Spannungsspitzen oder Durchschmelzen von Leitungen auf einem Chip) erfolgten Blockierung gegen dann nachfolgende Änderungen. Hier könnten auch Kodierungsdaten für Software gespeichert werden, die zur Bearbeitung der Daten einer noch weiteren Seite (page) des Speichers dienen, in der Daten jederzeit ausgelesen und neue wieder eingeschrieben werden können, was für sich bei jedem Behälterumlauf ändernde Daten vorgesehen ist.

### GEWERBLICHE AUSWERTKEIT

Die Erfindung ist u. a. in der Brautechnik gewerblich einsetzbar.

## Patentansprüche

1. Verfahren zur Erfassung des Umlaufs (Füllung, Leerung, Transport, Lagerung) von Fässern (10) für Bier o. dgl., bei welchem Verfahren zunächst während des Füllens des Fasses (10) an einer Füllstation ein in oder an dem Faß angebrachter Datenträger mit einer der Füllstation zugeordneten Sende-/Empfangseinrichtung (24) zwecks Übertragung von Daten in Wirkverbindung steht, wobei während des (oder nach dem) Füllen des Fasses (10) Fülldaten, wie das Fülldatum, ein Kennzeichen betreffend die eingefüllte Flüssigkeitsart, wie Biersorte, die Füllmenge, eine laufende Füllnummer usw. von der Sende-/Empfangseinrichtung (24) zum Datenträger übertragen und dort als Datensatz derart abrufbar abgespeichert wird, daß die Daten auch zu einem späteren Zeitpunkt an anderer Stelle ausgelesen werden können, dadurch gekennzeichnet, daß der Datenträger einen Transponder (14) umfaßt, der eine mit einem Digitalchip (18) versehene und in Vergußmasse eingebettete Ringspule (116) aufweist, aus welchem Digitalchip (18) die Daten nicht nur ausgelesen, sondern auch durch einen Einlesevorgang während des Umlaufs des Fasses (10) auch fortgeschrieben werden können.

2. Verfahren nach Anspruch 1, wobei bei Herstellung des Fasses dem Faß (10) ein Datenträger zugeordnet wird, in dem Herstellungsdaten für das Faß (10), wie eine laufende Herstellungsnummer, Herstellungstag, Herstellerfirma, Herstellungsmaterial, Volumen und andere faßspezifische Daten unveränderbar und abrufbar gespeichert werden, dadurch gekennzeichnet, daß der Datenträger als Transponder (14) ausgestaltet ist und daß faßspezifische Daten, wie für die Eichung des Fasses wichtige Daten, wie das (z. B. letzte) Eichdatum, in eine nur durch besondere Maßnahmen veränderbaren Speicher (26) eingespeichert werden.

3. Verfahren nach einem der Ansprüche 1 bis 2, dadurch gekennzeichnet, daß fertigungsspezifische Daten, wie Anzapfungsdaten des Fasses, wie Waschen, Füllen, Fülldatum, Füllbetrieb, Füllmaterial, Kunde, für jeden entsprechenden Vorgang in den Datenspeicher (26) des mit Digitalchips (18) versehenen Transponders (14) abrufbar eingespeichert werden.

4. Verfahren nach einem der Ansprüche 1 bis 3, dadurch gekennzeichnet, daß als Transponder (14) eine mit einem Digitalchip (18) versehene und in Vergußmasse eingebettete Ringspule (116) vorgesehen ist, die mittels "Snap-In"-, Einschraub-, Steck-, Einspritz- oder Thermoschweißverfahren oder mit einem anderen Verfahren, das eine zerstörungsfreie Entfernung nicht zuläßt, in eine der Zargen (19) (Ober- oder Unterzarge) des Fasses (10) eingebracht ist.

5. Verfahren nach Anspruch 4, dadurch gekennzeichnet, daß die Ringspule (116) einen Durchmesser oder Erstreckung aufweist, der in der Größenordnung der halben Breite (B) der metallischen Faß-Zarge liegt.

6. Verfahren nach Anspruch 4 oder 5, dadurch gekennzeichnet, daß die Spulenebene parallel zur Außenfläche (23) (Umfangsfläche) der Faßzarge (19) liegt und daß die Entfernung (A) des Mittelpunkts (M) (Achse) der Spule (116) vom Außenrand (21) (Stirnfläche) der Faßzarge (19) (Metallring) kleiner als der Spulendurchmesser (D) ist (Fig. 3, 5), wobei zwischen Spulenaußenseite (25) und Zargenmetall eine Vergußmassenwand (27) liegt, deren Dicke (d) (D-D1/2) in der Größenordnung der Abmessungen des Ringquerschnitts Q liegt.

7. Verfahren nach Anspruch 4 oder 5, dadurch gekennzeichnet, daß die Entfernung (E) des Mittelpunktes (M) der Spule (116) von einer Zargendurchbruchsöffnung (29), die größer als die Spule (116) ist, kleiner als der Spulendurchmesser (D) ist.

## Claims

1. Method of recording the life cycle (filling, emptying, transport, storage) of casks (10) for beer or the like, in which method during the filling of the cask (10) at a filling station a data carrier, which is mounted in or on the cask, is initially in operative connection with a transmitting/receiving device (24) assigned to the filling station for the purpose of transferring data, wherein during (or after) the filling of the cask (10) filling data, such as the date of filling, an identifier relating to the nature of the liquid filled, such as the type of beer, the filling amount, a filling serial number etc., are transferred from the transmitting/receiving device (24) to the data carrier where the data are stored retrievably in the form of a set of data in such a manner that the data can be read out also at a later date at a different location, **characterised in that** the data carrier comprises a transponder (14) having a ring coil (116) which is provided with a digital chip (18) and is embedded in potting compound, it being possible during the life cycle of the cask (10) not only to read out the data from the digital chip (18) but also to enter further data by means of an input operation.

2. Method according to claim 1, wherein during the manufacture of the cask the cask (10) is assigned a data carrier in which manufacturing data for the cask (10), such as a manufacturing serial number, the date of manufacture, the manufacturing company, the material from which it is made, its volume and other cask-specific data, are unalterably but retrievably stored, **characterised in that** the data carrier is in the form of a transponder (14), and cask-specific data, such as data significant for the calibration of the cask, such as the (e.g. last) calibration date, are entered into a memory (26) which can be altered only using special means.

3. Method according to either claim 1 or claim 2, **characterised in that** manufacture-specific data, such as the tapping date of the cask, such as washing, filling, the date of filling, the filling operation, the material filled and the customer, for each corresponding operation are entered retrievably into the data memory (26) of the transponder (14), which is provided with digital chips (18).

4. Process according to any one of claims 1 to 3, **characterised in that** there is provided as transponder (14) a ring coil (116), which is provided with a digital chip (18) and is embedded in potting compound and which is incorporated into one of the end hoops (19) (upper or lower end hoop) of the cask (10) by means of snap-in, screw-in, push-in, injection or thermobonding methods or by means of some other method that does not allow non-destructive removal.

5. Method according to claim 4, **characterised in that** the diameter or extent of the ring coil (116) is in the order of magnitude of half the width (B) of the metal end hoop of the cask.

6. Method according to claim 4 or 5, **characterised in that** the plane of the coil lies parallel with the outer surface (23) (circumferential surface) of the end hoop (19) of the cask and the distance (A) between the middle point (M) (axis) of the coil (116) and the outer edge (21) (end face) of the end hoop (19) of the cask (metal ring) is smaller than the diameter (D) of the coil (Fig. 3, 5), there being located between the outside of the coil (25) and the metal of the end hoop a wall of potting compound (27) the thickness of which (d) (D-D1/2) is in the order of magnitude of the dimensions of the cross-section Q of the ring.

7. Method according to claim 4 or 5, **characterised in that** the distance (E) between the middle point (M) of the coil (116) and an opening passing through the end hoop (29), which opening is larger than the coil (116), is smaller than the diameter (D) of the coil.

## Revendications

1. Procédé de saisie concernant la manipulation (remplissage, vidage, transport, stockage) de fûts (10) de bière ou liquide similaire, procédé au cours duquel tout d'abord pendant le remplissage du fût (10) dans une station de remplissage, un support de données placé dans ou sur le fût est en liaison active avec un dispositif émetteur/récepteur (24) attribué à la station de remplissage dans le but de transmettre des données, des données de remplissage, telles que la date de remplissage, un signe caractéristique correspondant au type de liquide rempli tel que la sorte de bière, la quantité remplie, un numéro successif de remplissage, etc. étant transmises pendant (ou après) le remplissage du fût (10) par le dispositif émetteur/récepteur (24) au support de données et y étant mises en mémoire comme bloc de données et pouvant être appelées de sorte que les données puissent être lues aussi à un moment ultérieur à un autre endroit, **caractérisé en ce que** le support de données comprend un transpondeur (14) qui présente une bobine toroïdale (116) logée dans de la masse isolante et munie d'une puce numérique (18), sur laquelle puce numérique (18) les données peuvent non seulement être lues mais aussi mises à jour au moyen d'un procédé d'enregistrement pendant la circulation du fût (10).

2. Procédé selon la revendication 1, un support de données étant placé dans le fût lors de la fabrication du fût (10), support de données sur lequel des données de fabrication concernant le fût (10), telles que le numéro de série de fabrication, le jour de fabrication, la société de fabrication, le matériau de fabrication, le volume et autres données spécifiques au fût sont mises en mémoire de façon à ne pas pouvoir être modifiées et pouvant être appelées, **caractérisé en ce que** le support de données est conçu comme un transpondeur (14) et que les données spécifiques au fût, comme les données importantes concernant le jaugeage du fût, telles que la date de jaugeage (par ex. la dernière), sont mises en mémoire dans une mémoire (26) modifiable uniquement par des mesures particulières.

3. Procédé selon l'une des revendications 1 à 2, **caractérisé en ce que** les données spécifiques à la fabrication, telles que les données de soutirage du fût, telles que le lavage, le remplissage, la date de remplissage, la société de remplissage, le matériau de remplissage, le client, sont stockées dans la mémoire de données (26) du transpondeur (14) muni de puces numériques (18) pour chaque procédé correspondant de façon à pouvoir être appelées.

4. Procédé selon l'une des revendications 1 à 3, **caractérisé en ce qu'**une bobine toroïdale (116) logée dans de la masse isolante et munie d'une puce numérique (18) est prévue comme transpondeur (14), laquelle bobine est placée dans l'une des extrémités (19) (inférieure ou supérieure) du fût (10) au moyen d'un procédé d'encliquetage, de vissage, d'emboîtement, d'injection, de thermo-soudure ou d'un autre procédé qui ne permet pas de retrait non destructif.

5. Procédé selon la revendication 4, **caractérisé en ce que** la bobine toroïdale (116) présente un diamètre ou une longueur située dans l'ordre de grandeur de la demi-largeur (B) de l'extrémité métallique du fût.

6. Procédé selon la revendication 4 ou 5, **caractérisé en ce que** le niveau de la bobine est parallèle à la surface extérieure (23) (surface du pourtour) de l'extrémité du fût (19) et que la distance (A) du point médian (M) (axe) de la bobine (116) par rapport au bord extérieur (21) (surface frontale) de l'extrémité du fût (19) (anneau métallique) est plus petite que le diamètre de la bobine (D) (figures 3, 5), une paroi de la masse isolante (27) étant située entre le côté extérieur de la bobine (25) et le métal de l'extrémité, l'épaisseur (d) (D-D1/2) de cette paroi étant située dans l'ordre de grandeur des dimensions de la coupe transversale de l'anneau.

7. Procédé selon la revendication 4 ou 5, **caractérisé en ce que** la distance (E) du point médian (M) de la bobine (116) par rapport à une ouverture (29) dans l'extrémité plus grande que la bobine (116), est inférieure au diamètre de la bobine (D).
